# EUROPEAN PATENT SPECIFICATION

(11) **EP 2 434 828 B1**
(45) Date of publication and mention of the grant of the patent: **07.11.2012**
(21) Application number: 10290503.1
(22) Date of filing: 22.09.2010
(51) Int. Cl.: H04W 74/08, H04W 48/08

(54) **Machine type communications in a radio network**
Maschinenartige Kommunikationen in einem Funknetzwerk
Communications de type machine dans un réseau radio

(43) Date of publication of application: 28.03.2012
(73) Proprietor: Alcatel Lucent, 75007 Paris (FR)
(72) Inventor: Aydin, Osman, 70569 Stuttgart (DE); Doetsch, Uwe, 74392 Freudental (DE)
(74) Representative: Wetzel, Emmanuelle

(56) References cited:
- WO-A1-01/74107
- US-A1- 2010 035 641
- HUAWEI: "RAN overload control solutions", 3GPP DRAFT; R2-103967 RAN OVERLOAD CONTROL SOLUTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 21 June 2010 (2010-06-21), XP050451070, [retrieved on 2010-06-21]
- ALCATEL-LUCENT SHANGHAI BELL ET AL: "Discussion on RACH design for MTC", 3GPP DRAFT; R2-101407, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 15 February 2010 (2010-02-15), XP050421660, [retrieved on 2010-02-15]
- SAMSUNG: "Random access design for MTC", 3GPP DRAFT; R2-104015_RANDOM ACCESS DESIGN FOR MTC_R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 21 June 2010 (2010-06-21), XP050451081, [retrieved on 2010-06-21]

## Description

### Field of the Invention

The invention relates to the field of telecommunications, and, more specifically, to methods and devices for performing Machine Type Communications (MTC) in a radio network.

### Background

This section introduces aspects that may be helpful in facilitating a better understanding of the invention. Accordingly, the statements of this section are to be read in this light and are not to be understood as admissions about what is in the prior art or what is not in the prior art.

Beside human activated services (e.g. voice and ftp/http data transfer) in radio communication networks, a new form of communication, the so called Machine Type Communication (MTC) is investigated to be integrated into radio communication networks (such as UMTS, LTE, etc.). However, the design of present radio communication networks is not preferably designed for machine devices, e.g. sensors or actuators, acting in MTC. Thus, there are several challenges to provide an efficient Machine to Machine (M2M) communication in a settled (legacy) radio network.

For instance, from the point of view of the machine device, it is desired to have algorithms that provide energy efficient working, regarding e.g. limited battery capacity of cheap or small machine devices such as sensors. The challenge from the network point of view is how to handle the large number of machine devices (sensors etc.) spread in a cell of the radio access network. The objective is not to overload the network, efficiently use Radio network resources for M2M communications and also not to harm legacy services (e.g. voice).

An example of the prior art can be found in document WO 01/74107 A1.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

According to the present invention, there is provided a method for providing information from a machine device as defined in appended claim 1, a machine device as defined in appended claim 8 and a receiving device as defined in appended claim 13. Preferred features are set out in claims 2-7, 9-12 and 14-15.

One aspect relates to a method for providing information from a machine device, in particular from a sensor device, to a radio access network, the method comprising: transmitting, by the machine device, a plurality of Random Access Channel preambles over a Random Access Channel, the information being encoded by transmitting the Random Access Channel preambles with pre-selected frequency offsets relative to each other.

A Random Access Channel (RACH) is generally used by wireless devices to get the attention of a base station in order to initially synchronize its transmission with the base station. The RACH is a shared channel that is used by a plurality of wireless devices, and the signals (Random Access Channel preambles) transmitted on the RACH are not scheduled, such that collisions between RACH preambles of different wireless devices may occur.

The base stations of radio access networks, .e.g. eNB implementations in LTE, have to recognize data transmitted from user equipments on the Random Access Channel (RACH) which move with speeds of up to 500 km/h. The speed of the user equipments leads to a Doppler shift of the received Random Access Channel preambles of the RACH which has to be taken into account for decoding. Therefore, a base station typically has a means for decoding signals received with a Doppler shift, i.e. with a deviation (frequency offset) from the nominal frequency of the RACH in the order of typically several hundred Hz.

The inventors propose to use the possibility of synchronic decoding of RACH preambles with different frequencies which is already available in the base station / radio access network in order to provide information to the RAN. For this purpose, a plurality of RACH preambles is transmitted by one and the same machine device, the information being encoded by using pre-defined frequency offsets between the RACH preambles which may be recognized by the base station / radio access network. For instance, a machine-specific sequence of frequency offsets, or machine-specific frequency offsets may be chosen for each (or a group of) machine devices, allowing at least to identify the machine device(s) in the radio access network based on the pre-selected frequency offsets. The term "pre-selected" refers to the fact that typically the base station / RAN has knowledge about the specific frequency offsets / sequences of frequency offsets of the mobile devices which may transmit on the RACH. In the way described above, cost and energy efficient transfer of information from machine devices to the radio access network / base station may be performed.

In one variant, the information is also encoded by transmitting the Random Access Channel preambles with pre-selected timing offsets relative to each other. In this example, a time sequence of RACH preambles is transmitted with different frequency offsets and typically one pre-defined time offset between subsequent RACH preambles. In this way, a frequency offset hopping pattern may be provided, using both the time and frequency dimension to provide information over the RACH to the Radio Access Network. A specific frequency offset hopping pattern may be defined for each mobile device, allowing the base station / RAN to identify the machine device.

In an alternative variant, at least two, preferably all Random Access Channel preambles are transmitted at the same point of time. In this variant, the possibility of synchronic decoding of several RACH preambles at the same point of time can be advantageously used for increasing the amount of information which can be transmitted on the RACH.

In another variant, the information is also encoded using the content of the Random Access Channel preambles, in particular their sequence numbers. By making a selection of the sequence numbers of the RACH preambles, a further dimension of encoding may be provided which allows provisioning an additional amount of information to the radio access network. The selection of the content of the RACH preambles may be used concurrently with the use of frequency offsets and possibly also timing offsets, optionally providing a frequency, time and coding dimension for the transmitted information.

In a further variant, at least one of the frequency offsets, the timing offsets, and the content of the Random Access Channel preambles is pre-configured in the machine device upon installation of the machine device. Pre-configuring the machine device with the frequency offsets and/or RAN specific parameters during installation is particularly advantageous, as the machine device need not communicate with the RAN for receiving the pre-defined frequency offsets. However, especially with machine devices which move between different locations of the RAN, it may be desirable to modify / update the pre-selected frequency offsets by explicit messages from the RAN to the machine devices.

The proposed idea is most efficient when the speed of the machine device is known in a receiving device in the RAN. In this case, the respective Doppler shift (frequency offset) of the received radio signal is known beforehand and can be used as a basis for the first point of the proposed frequency offset (and possibly time offset) hopping pattern.

In another variant, the encoded information comprises identification information for identifying the machine device and/or status information for informing the radio access network about a status of the machine device. When the machine device is a sensor device which only observes if a single quantity, e.g. temperature, stress, etc. is in a pre-defined range, a RACH preamble sequence may only be sent by the sensor device as soon as the measured quantity is out of the specific range. In this case, the transmission of the RACH preambles by the sensor device is already a status information indicating that there is a problem with the quantity being observed by the sensor device.

In a further variant, the Random Access Channel preambles are transmitted using a power level which is selected based on a power level of a previous successful communication between the machine device and the radio access network over the Random Access Channel. As indicated above, the RAN connection is guaranteed through the RACH procedure (random access), using uplink transmissions with increasing power levels. Thus, the RACH procedure may have different power ramp up steps until a successful set-up of the RACH procedure is achieved, i.e. the RAN is capable of decoding the RACH preamble(s).

The last power ramp up level of a successful RACH procedure may be stored in the machine device. For the next network RACH procedure, either the stored power ramp up level or e.g. the power ramp up level one step below the stored level may be used, thus reducing the number of steps and consequently the power consumption of the RACH procedure. This approach is most efficient if used for stationary (non-mobility) sensors (e.g. sensors attached to a bridge or at defined traffic points for reporting traffic, etc.)

A further aspect of the invention relates to a (machine) device, in particular to a sensor device, comprising: a transmission unit adapted for transmitting a plurality of Random Access Channel preambles over a Random Access Channel to a radio access network, and an encoding unit for encoding information to be provided to the radio access network over the Random Access Channel, the encoding unit being adapted to encode the information by (pre-)selecting frequency offsets between the Random Access Channel preambles to be transmitted by the transmission unit.

One skilled in the art will appreciate that although typically the (machine) device typically provides low functionality, is cheap and should not consume much energy, other devices, e.g. wireless mobile terminals used for interaction with users (user equipments), may be provided with the additional functionality to use the Random Access Channel for the transfer of information to the RAN.

In one example, the encoding unit is further adapted to select timing offsets between the Random Access Channel preambles for encoding the information. In addition to the frequency offsets, timing offsets may be provided between the RACH preambles, allowing to use a time and frequency pattern for transmitting the information to the RAN. Although the same timing offset may be used for all preambles of the RACH preamble sequence, it may also be possible to modify the timing offset between subsequent preambles of the sequence, providing an additional degree of freedom for the encoding.

In another example, the encoding unit is further adapted to select the content of the Random Access Channel preambles, in particular their sequence numbers, for encoding the information. The information to be provided may also be encoded using the content of the RACH preambles. By using this additional degree of freedom for the encoding, the number of RACH preambles required for transmitting a specific amount of information may be reduced, avoiding to overload the Random Access Channel by efficient use of Radio network resources.

In another example, the machine device is adapted to use pre-configured network configuration parameters, in particular pre-configured higher layer parameters, of the radio access network for communication over the Random Access Channel. For an energy efficient sensor node implementation, a network pre-configuration may be uploaded on site during the first setup (installation) of the sensor in the field. For this purpose, higher layer parameters, i.e. parameters from layers above the physical layer, such as network and cell specific layer 2 and layer 3 parameters, are read from system information of the RAN and are uploaded to the machine device, typically during installation of the machine device (in the field). Layer 2 and layer 3 procedure parameters may then be stored in the machine device and may either be used for its entire life-time or until the next update period (e.g. in case of a relevant network parameter change). In this way, there is no need for a complete layer 2 and layer 3 hardware and/or software integration in the machine device.

A further aspect relates to a machine network comprising a plurality of machine devices of the type described above, the machine network further comprising: a master machine device adapted to receive network configuration parameters from the radio access network, and to distribute the network configuration parameters to the plurality of machine devices for updating pre-configured network parameters, in particular higher layer parameters, used in the machine devices for communication with the radio access network over the Random Access Channel. Such a machine network is particularly advantageous in order to avoid power-consuming wireless communications of the machine devices with the RAN.

In the machine network, the master machine device is used for receiving the network configuration parameters from the radio access network and to distribute the parameters to the other machine devices, which may be connected to the master machine device e.g. via cabling or possibly using short-range wireless communications such as ZigBee, Bluetooth, etc. having comparatively low power consumption.

Yet another aspect relates to a receiving device, in particular to base station, for communicating over a Random Access channel with at least one machine device as described above, the receiving device being adapted to decode the information encoded in the frequency offsets and preferably in the timing offsets between the Random Access Channel preambles and/or the contents of the Random Access Channel preambles transmitted by the at least one machine device. Using the receiving device, based on the decoded information, a specific machine device may be identified and additional information, e.g. about the status of the machine device, may be obtained by the RAN.

In one example, the receiving device is adapted to identify the machine device by comparing the decoded information with stored information about pre-configured frequency offsets and preferably pre-configured timing offsets between the Radio Access Channel preambles and/or the contents of the Radio Access Channel preambles transmitted by a plurality of different machine devices.

When using e.g. a time and frequency coding, a grid with fixed frequency and timing offsets for the RACH preambles of all the machine devices may be defined in the RAN. For each machine device, a pre-selected, preferably unique selection of points in the time / frequency grid (frequency hopping pattern) may be chosen and stored in the receiving device or elsewhere in the RAN.

Another aspect relates to a cell for a radio access network, comprising: a receiving device in the form of a base station as indicated above, and a plurality of machine devices of the type described above. The cell may be part of a RAN which provides M2M communication over the RACH. The prerequisite for performing the communications is that the RAN provides the possibility to decode signals in a frequency range which allows taking the Doppler shift into account, which is the case e.g. with the LTE (advanced) standard, or other standards which provide this possibility.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of a cell according to the invention, providing M2M communications over a RACH channel for a plurality of sensor devices,
- **Figs. 2a,b**: show time / frequency diagrams for two different ways of transmitting a plurality of RACH preambles by one of the sensor devices of Fig. 1, and
- **Fig. 3**: shows a schematic representation of a machine network according to the invention.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

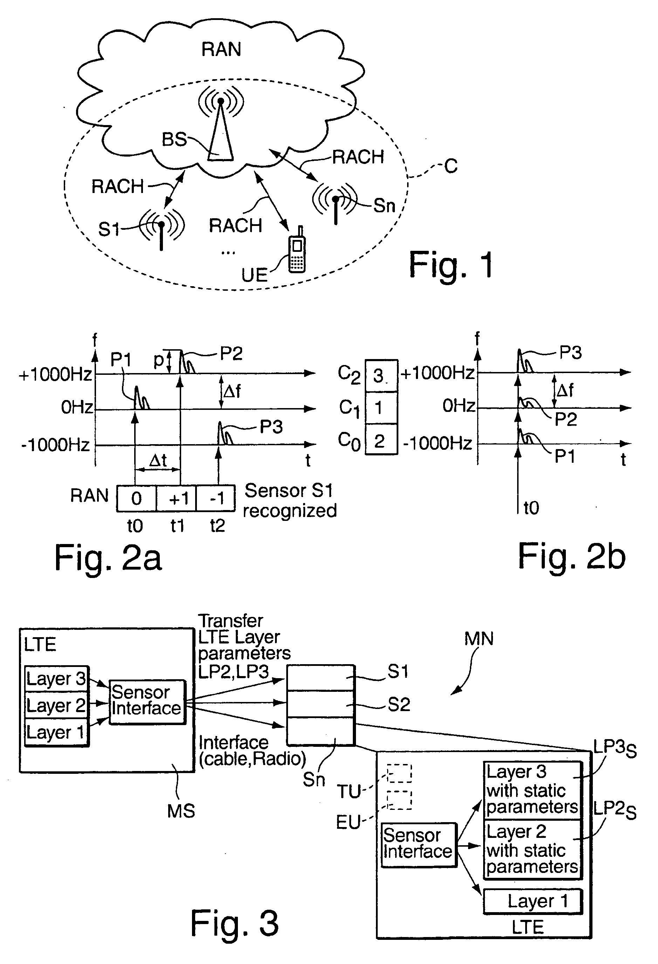

**Fig. 1** shows a radio access network RAN according to the LTE (advanced) standard which has a plurality of cells, only one of which (cell C) being shown for the sake of simplicity. The cell C comprises a base station BS and serves a plurality of machine devices in the form of sensor devices S1 to Sn not supporting human activated services, as well as user equipments supporting such services only one of which (user equipment UE) is represented in Fig. 1. The sensor devices S1 to Sn as well as the user equipments UE perform communications over a Random Access Channel RACH to get the attention of the base station BS in order to initially synchronize their transmissions with the base station BS.

In the present example, the Random Access Channel RACH is also used for providing information from specific ones of the sensor devices S1 to Sn to the base station BS. For this purpose, a sensor device, e.g. the first sensor device S1, transmits a plurality of RACH preambles P1 to P3 over the Random Access Channel RACH, as indicated in Figs. 2a,b, the information being encoded in the specific way in which the transmission of the RACH preambles P1 to P3 is performed, as will be outlined below.

In the example shown in Fig. 2a, three RACH preambles P1 to P3 are transmitted subsequently at time instances t0 to t3 by the first sensor device S1, a (constant) timing offset Δt / time interval being provided between subsequent ones of the time instances t0 to t3. Moreover, the RACH preambles P1 to P3 are transmitted using frequency offsets +Δf, -Δf etc. with respect to each other. In the present example, the sensor device S1 is stationary and provides the first RACH preamble P1 with a frequency which does not deviate from a nominal frequency of the RACH channel, represented as 0 Hz in Fig. 2a.

The second preamble P2 is transmitted with a positive frequency offset of Δf = +1000 Hz with respect to the nominal frequency, whereas the third preamble P3 is transmitted with a negative frequency offset of Δf= -1000 Hz with respect to the nominal frequency of the Random Access Channel RACH.

In the present example, an identical spacing for the time and frequency offsets is chosen for all of the sensor devices S1 to Sn, defining a two-dimensional grid in which specific points in frequency and time (frequency hopping pattern) are defined for each sensor device S1 to Sn, providing an individual signature allowing to identify a specific one of the sensor devices S1 to Sn in a unique way.

In the example of Fig. 2a, identification of a the first sensor device S1 is provided by identifying its (unique) signature of the three subsequent frequency offsets with values 0, +1, -1, transmitted at respective times t₀, t₁, and t₂. It will be understood that Fig. 2a shows only a simple example of a time/frequency grid and that both the number of different frequency offsets and the number of subsequent transmissions of RACH preambles may be higher or lower than those indicated in Fig. 2a. In a similar manner, the second sensor device S2 may be identified by a sequence of frequency offsets being e.g. 0, -1, +1, etc.

Fig. 2a also shows a power level p of the uplink RACH preambles P1 to P3. During the RACH procedure, different (discrete) power ramp up steps may have to be performed until a power level is reached which allows successful communication with the RAN. The last power ramp up level, i.e. the power level which allows a successful RACH procedure, is stored in the sensor device S1. In a subsequent RACH procedure, either the stored power level may be used as a first ramp up level, or a power level just below the stored power level may be used as first power level of the subsequent RACH procedure. In this way, the power consumption of the RACH procedure may be reduced, as a smaller number of power ramp up steps will be required.

Instead of using a sequence of RACH preambles P1 to P3 transmitted at different points of time, it is also possible to transmit all or at least some of the RACH preambles P1 to P3 at the same instant of time t0, as indicated in Fig. 2b. Typically, when this option is used, a relatively high number of different frequency levels is required for encoding the information. In order to reduce the number of frequency levels, the information to be provided to the Random Access Network RAN can additionally be encoded by selecting a specific RACH preamble content, in the present case a sequence number C₀, C₁, C₂. In this way, the three RACH preambles P1 to P3 can be differentiated by their content, as indicated in Fig. 2b (for a simple graphical representation only) by three different amplitudes of the RACH preambles P1 to P3, and identification of a specific sensor device S1 is possible in the RAN by comparing the signature of the sequence numbers C₀ = 2, C₁ = 1, and C₂ = 3 with pre-defined signatures of a plurality of sensor devices S1 to Sn.

As indicated above, it is also possible to combine the coding of Fig. 2b with that of Fig. 2a, i.e. to combine frequency coding with time and/or with content coding. In any case, the different frequencies of the RACH preambles P1 to P3 have to be decoded by the base station BS, which is implemented as an eNB in the present example of a Radio Access Network RAN in compliance with the LTE standard. As the base station BS has the capability to decode signals transmitted on the RACH which deviate from the nominal frequency of the RACH by an offset due to a Doppler shift which may be e.g. in the order of +/-1000 Hz or more, the base station BS may be used to decode the information as a signature within a grid of frequency offsets having an equal spacing and ranging e.g. from - 3Δf, -2 Δf, - Δf to +Δf, +2 Δf, +3 +Δf, etc. In addition, the base station BS is also capable to determine the content of the RACH preambles P1 to P3, and to correlate the content of the RACH preambles with the specific time instant and frequency at which it is received.

As it is mandatory for the base station BS to first identify a particular sensor device S1 to Sn before it can make use of status information which is provided by that sensor device S1 to Sn, the base station BS compares the specific frequency, time and/or content of the received RACH preambles with stored information about pre-configured frequency offsets and possibly pre-configured timing offsets and content which is used as a signature (coding) allowing to identify a specific one of the sensor devices.

Although in the above description it has been proposed to use the same spacing of frequency offsets for all sensor devices S1 to Sn, it may also be possible to differentiate the sensor devices S1 to Sn by selecting a specific frequency spacing and/or time spacing (i.e. a specific time/frequency grid) for each sensor device S1 to Sn which allows to identify that specific sensor device S1 to Sn. In this case, the signature / pattern which is provided in the sensor-specific grid can be used entirely to provide status information to the RAN.

Alternatively, for transmitting sensor-specific status information, the sensor devices S1 to Sn may be identified e.g. by pre-defined number of RACH preambles which are the first ones in a transmitted sequence, the remaining RACH preambles of the sequence being used for the providing status information about the specific sensor device S1 to Sn to the Radio Access Network RAN. It will be understood that alternatively, the mere transmission of a RACH sequence may be sufficient to indicate that something is wrong with the component / machine which is monitored by that specific sensor device. In particular, the sensor device may only transmit a RACH preamble when a quantity measured by the sensor device, e.g. a temperature, deviates from a targeted range.

Furthermore, for an energy efficient sensor implementation, a network pre-configuration may be uploaded on site during the first setup of the sensor devices S1 to Sn, i.e. an operator may store pre-configured network-specific parameters of the higher layers (above the physical layer) of the radio network, resp., of the cell C which serves the sensor devices S1 to Sn, when installing the sensor devices S1 to Sn in the field.

The higher-layer network parameters may be stored in the sensor devices S1 to Sn during their entire lifetime (especially in the case of static sensor devices), or, alternatively, the higher layer parameters may be updated regularly or when a sensor-relevant network parameter change occurs. In this way, a complete hardware and/or software integration of the higher network layers in the sensor devices S1 to Sn can be dispensed with.

In particular, an update or initialization of the sensor devices S1 to Sn may be performed in a way which will be explained now with reference to **Fig. 3**, showing a machine network MN comprising a master sensor device MS which is adapted to receive current network configuration parameters LP2, LP3 of the second and third layer of the LTE standard from the radio access network RAN (see Fig. 1), and is further adapted to distribute the network configuration parameters LP2, LP3 to the plurality of sensor devices S1 to Sn for updating pre-configured semi-static network parameters LP2ₛ, LP3ₛ currently stored in the (slave) sensor devices S1 to Sn.

The sensor devices S1 to Sn will then update the sensor parameters LP2ₛ, LP3ₛ, i.e. they will replace them with the values LP2, LP3 currently received from the master device MS. The advantage of the configuration of Fig. 3 is that the sensor devices S1 to Sn and the master sensor device MS may use a specific sensor interface for the communication, which may be wire-based (via cabling) or wireless, typically using a short-range wireless communication standard, e.g. a ZigBee standard, thus reducing the power consumption for the communications. It will be understood that the RACH preambles may also be sent from the sensor devices S1 to Sn via the master sensor device MS to the RAN.

Of course, the sensor devices S1 to Sn of the machine network MN may also provide the RACH preambles P1 to P3 directly to the RAN. For this purpose, an exemplary sensor device Sn shown in Fig. 3 comprises a transmission unit TU for wireless communications with the RAN over the Random Access Channel RACH. In addition, the sensor device Sn also comprises an encoding unit EU for encoding information to be provided to the radio access network RAN over the Random Access Channel RACH, the encoding unit EU being adapted to encode the information in the way described with reference to Figs. 2a,b above, i.e. using specific patterns in the frequency, and possibly in the time and/or code / content domain.

In the way described above, the communication of the (access) network with a large number (e.g. several hundreds) of sensors spread in a cell may be handled in a way which does not overload the network, and makes efficient use of radio network resources for M2M communications, such that legacy services (e.g. voice) will not suffer from the additional communications with the sensor devices.

Those skilled in the art will appreciate that the transfer of encoded information to the Radio Access Network RAN over the Random Access Channel RACH is not limited to sensor devices. In particular, user equipments UE (see Fig. 1) which allow human interactions may also be provided with this additional communication functionality.

Moreover, it will be appreciated that although the above description has been given with respect to a radio access network in compliance with the LTE (advanced) standard, it may be applied equally well to radio networks using a Random Access Channel and which allow decoding of signals in the Random Access Channel within a certain frequency range deviating from a nominal frequency in order to take Doppler shifts into account.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for providing information from a machine device, in particular from a sensor device (S1 to Sn), to a radio access network (RAN), comprising:
transmitting, by the machine device (S1 to Sn), a plurality of Random Access Channel preambles (P1 to P3) over a Random Access Channel (RACH),
**characterized in that**
the information is encoded by transmitting the Random Access Channel preambles (P1 to P3) with pre-selected frequency offsets (0, +Δf, - Δf) relative to each other.

2. Method according to claim 1, wherein the information is also encoded by transmitting the Random Access Channel preambles (P1 to P3) with pre-selected timing offsets (Δt) relative to each other.

3. Method according to claim 1 or 2, wherein two or more of the Random Access Channel preambles (P1 to P3) are transmitted at the same point of time (t₀).

4. Method according to any one of the preceding claims, wherein the information is also encoded using the content of the Random Access Channel preambles (P1 to P3), in particular their sequence numbers (C₀, C₁, C₂).

5. Method according to any one of the preceding claims, wherein at least one of the frequency offsets (0, +Δf, -Δf), the timing offsets (Δt), and the content of the Random Access Channel preambles (P1 to P3) is pre-configured in the machine device (S1 to Sn) upon installation of the machine device (S1 to Sn).

6. Method according to any one of the preceding claims, wherein the encoded information comprises identification information for identifying the machine device (S1 to Sn) and/or status information for informing the radio access network (RAN) about a status of the machine device (S1 to Sn).

7. Method according to any one of the preceding claims, wherein the Random Access Channel preambles (P1 to P3) are transmitted using a power level (p) which is selected based on a power level of a previous successful communication between the machine device (S1 to Sn) and the radio access network (RAN) over the Random Access Channel (RACH).

8. Machine device, in particular sensor device (Sn), comprising:
a transmission unit (TU) adapted for transmitting a plurality of Random Access Channel preambles (P1 to P3) over a Random Access Channel (RACH) to a radio access network (RAN), and
an encoding unit (EU) for encoding information to be provided to the radio access network (RAN) over the Random Access Channel (RACH),
**characterized in that**
the encoding unit (EU) is adapted to encode the information by selecting frequency offsets (0, +Δf, -Δf) between the Random Access Channel preambles (P1 to P3) to be transmitted by the transmission unit (TU).

9. Machine device according to claim 8, wherein the encoding unit (EU) is further adapted to select timing offsets (Δt) between the Random Access Channel preambles (P1 to P3) for encoding the information.

10. Machine device according to claim 8 or 9, wherein the encoding unit (EU) is further adapted to select the content of the Random Access Channel preambles (P1 to P3), in particular their sequence numbers (C₀, C₁, C₂), for encoding the information.

11. Machine device according to any one of claims 8 to 10, being adapted to use pre-configured network configuration parameters, in particular pre-configured higher layer parameters (LP2, LP3), of the radio access network (RAN) for communication over the Random Access Channel (RACH).

12. Machine network (MN) comprising a plurality of machine devices (S1 to Sn) according to any one of claims 8 to 11, the machine network (MN) further comprising: a master machine device (MS) adapted to receive network configuration parameters (LP2, LP3) from the radio access network (RAN), and to distribute the network configuration parameters (LP2, LP3) to the plurality of machine devices (S1 to Sn) for updating pre-configured network parameters, in particular higher layer parameters (LP2_{S}, LP3_{S}), used in the machine devices (S1 to Sn) for communication with the radio access network (RAN) over the Random Access Channel (RACH).

13. Receiving device, in particular base station (BS), for communicating over a Random Access channel (RACH) with at least one machine device (S1 to Sn) according to any one of claims 8 to 11,
**characterized in that**
the receiving device (BS) is adapted to decode the information encoded in the pre-selected frequency offsets (0, +Δf, -Δf) between the Random Access Channel preambles (P1 to P3) transmitted by the at least one machine device (S1 to Sn).

14. Receiving device according to claim 13, adapted to identify the machine device (S1 to Sn) by comparing the decoded information with stored information about pre-configured frequency offsets (0, +Δf, -Δf) of the Radio Access Channel preambles (P1 to P3) of a plurality of different machine devices (S1 to Sn).

15. System (C) for a radio access network (RAN), comprising:
a base station (BS) according to claim 13 or 14, and
a plurality of machine devices (S1 to Sn) according to any one of claims 8 to 11.

## Patentansprüche

1. Verfahren zur Bereitstellung von Informationen von einer Maschineneinrichtung, insbesondere von einer Sensoreinrichtung (S1 bis Sn), an ein Funkzugangsnetzwerk (RAN), umfassend:
Übertragen, durch die Maschineneinrichtung (S1 bis Sn) an eine Vielzahl von Random-Access-Kanal-Präambeln (P1 bis P3) über einen Random-Access-Kanal (RACH),
**dadurch gekennzeichnet, dass**
die Informationen durch die Übertragung der Random-Access-Kanal-Präambeln (P1 bis P3) mit vorausgewählten Frequenz-Offsets (0, +Δf, -Δf) relativ zueinander codiert werden.

2. Verfahren nach Anspruch 1, wobei die Informationen ebenfalls durch die Übertragung der Random-Access-Kanal-Präambeln (P1 bis P3) mit vorausgewählten Zeit-Offsets (Δt) relativ zueinander codiert werden.

3. Verfahren nach Anspruch 1 oder 2, wobei zwei oder mehr der Random-Access-Kanal-Präambeln (P1 bis P3) zum selben Zeitpunkt (t₀) übertragen werden.

4. Verfahren nach einem beliebigen der vorstehenden Ansprüche, wobei die Informationen ebenfalls unter Verwendung des Inhalts der Random-Access-Kanal-Präambeln (P1 bis P3), insbesondere deren Sequenznummern (C₀, C₁, C₂), codiert werden.

5. Verfahren nach einem beliebigen der vorstehenden Ansprüche, wobei mindestens entweder die Frequenz-Offsets (0, +Δf, -Δf), die Zeit-Offsets (M) oder der Inhalt der Random-Access-Kanal-Präambeln (P1 bis P3) nach der Installation der Maschineneinrichtung (S1 bis Sn) in der Maschineneinrichtung (S1 bis Sn) vorkonfiguriert werden.

6. Verfahren nach einem beliebigen der vorstehenden Ansprüche, wobei die codierten Informationen Identifikationsinformationen zum Identifizieren der Maschineneinrichtung (S1 bis Sn) und/oder Zustandsinformationen zum Informieren des Funkzugangsnetzwerks (RAN) über einen Zustand der Maschineneinrichtung (S1 bis Sn) umfassen.

7. Verfahren nach einem beliebigen der vorstehenden Ansprüche, wobei die Random-Access-Kanal-Präambeln (P1 bis P3) unter Verwendung eines Leistungspegels (p), welcher auf der Basis eines Leistungspegels einer vorherigen erfolgreichen Kommunikation zwischen der Maschineneinrichtung (S1 bis Sn) und dem Funkzugangsnetzwerk (RAN) über den Random-Access-Kanal (RACH) ausgewählt wird, übertragen werden.

8. Maschineneinrichtung, insbesondere Sensoreinrichtung (Sn), umfassend:
Eine Übertragungseinheit (TU), ausgelegt für die Übertragung einer Vielzahl von Random-Access-Kanal-Präambeln (P1 bis P3) über einen Random-Access-Kanal (RACH) an ein Funkzugangsnetzwerk (RAN), und
eine Codiereinheit (EU) für die Codierung von über den Random-Access-Kanal (RACH) an das Funkzugangsnetzwerk (RAN) bereitzustellenden Informationen,
**dadurch gekennzeichnet, dass**
die Codiereinheit (EU) für die Codierung von Informationen durch das Auswählen von Frequenz-Offsets (0, +Δf, -Δf) zwischen den von der Übertragungseinheit (TU) zu übertragenden Random-Access-Kanal-Präambeln (P1 bis P3) ausgelegt ist.

9. Maschineneinrichtung nach Anspruch 8, wobei die Codiereinheit (EU) weiterhin für die Auswahl von Zeit-Offsets (Δt) zwischen den Random-Access-Kanal-Präambeln (P1 bis P3) zur Codierung der Informationen ausgelegt ist.

10. Maschineneinrichtung nach Anspruch 8 oder 9, wobei die Codiereinheit (EU) weiterhin für die Auswahl den Inhalt der Random-Access-Kanal-Präambeln (P1 bis P3), insbesondere deren Sequenznummern (C₀, C₁, C₂), zur Codierung der Informationen ausgelegt ist.

11. Maschineneinrichtung nach einem beliebigen der Ansprüche 8 bis 10, dazu ausgelegt, vorkonfigurierte Netzwerkkonfigurationsparameter, insbesondere vorkonfigurierte Parameter höherer Schichten (LP2, LP3), des Funkzugangsnetzwerks (RAN) für die Kommunikation über den Random-Access-Kanal (RACH) zu verwenden.

12. Maschinennetzwerk (MN), umfassend eine Vielzahl von Maschineneinrichtungen (S1 bis Sn) gemäß einem beliebigen der Ansprüche 8 bis 11, wobei das Maschinennetzwerk (MN) weiterhin umfasst: Eine Master-Maschineneinrichtung (MS), dazu ausgelegt, Netzwerkkonfigurationsparameter (LP2, LP3) von dem Funkzugangsnetzwerk (RAN) zu empfangen und die Netzwerkkonfigurationsparameter (LP2, LP3) an die Vielzahl von Maschineneinrichtungen (S1 bis Sn) zu verteilen, um vorkonfigurierte Netzwerkparameter, insbesondere Parameter höherer Schichten (LP2ₛ, LP3ₛ), die in den Maschineneinrichtungen (S1 bis Sn) für die Kommunikation mit dem Funkzugangsnetzwerk (RAN) über den Random-Access-Kanal (RACH) verwendet werden, zu aktualisieren.

13. Empfangseinrichtung, insbesondere Basisstation (BS) für die Kommunikation, über einen Random-Access-Kanal (RACH), mit mindestens einer Maschineneinrichtung (S1 bis Sn) gemäß einem beliebigen der Ansprüche 8 bis 11,
**dadurch gekennzeichnet, dass**
die Empfangseinrichtung (BS) für die Decodierung der in den vorausgewählten Frequenz-Offsets (0, +Δf, -Δf) zwischen den von der mindestens einen Maschineneinrichtung (S1 bis Sn) übertragenen Random-Access-Kanal-Präambeln (P1 bis P3) codierten Informationen ausgelegt ist.

14. Empfangseinrichtung nach Anspruch 13, ausgelegt für die Identifikation der Maschineneinrichtung (S1 bis Sn) durch Vergleichen der decodierten Informationen mit gespeicherten Informationen in Bezug auf vorkonfigurierte Frequenz-Offsets (0, +Δf, -Δf) der Funkzugangskanal-Präambeln (P1 bis P3) einer Vielzahl von unterschiedlichen Maschineneinrichtungen (S1 bis Sn).

15. System (C) für ein Funkzugangsnetzwerk (RAN), umfassend:
Eine Basisstation (BS) nach Anspruch 13 oder 14, und
eine Vielzahl von Maschineneinrichtungen (S1 bis Sn) gemäß einem beliebigen der Ansprüche 8 bis 11.

## Revendications

1. Procédé pour fournir des informations provenant d'un dispositif machine, provenant en particulier d'un dispositif capteur (S1 à Sn), à un réseau d'accès radio (RAN), comprenant :
la transmission, au moyen du dispositif machine (S1 à Sn), d'une pluralité de préambules de canal d'accès aléatoire (P1 à P3) sur un canal d'accès aléatoire (RACH),
**caractérisé en ce que**
les informations sont codées en transmettant les préambules de canal d'accès aléatoire (P1 à P3) avec des décalages de fréquence pré-sélectionnés (0, +Δf, -Δf) les uns par rapport aux autres.

2. Procédé selon la revendication 1, dans lequel les informations sont également codées en transmettant les préambules de canal d'accès aléatoire (P1 à P3) avec des décalages de synchronisation pré-sélectionnés (Δt) les uns par rapport aux autres.

3. Procédé selon la revendication 1 ou 2, dans lequel au moins deux des préambules de canal d'accès aléatoire (P1 à P3) sont transmis au même moment (t₀).

4. Procédé selon l'une quelconque des revendications précédentes, dans lequel les informations sont également codées en utilisant le contenu des préambules de canal d'accès aléatoire (P1 à P3), en particulier leurs numéros de séquence (C₀, C₁, C₂).

5. Procédé selon l'une quelconque des revendications précédentes, dans lequel au moins les décalages de fréquence (0, +Δf, -Δf), les décalages de synchronisation (Δt) ou le contenu des préambules de canal d'accès aléatoire (P1 à P3) sont pré-configurés dans le dispositif machine (S1 à Sn) lors de l'installation du dispositif machine (S1 à Sn).

6. Procédé selon l'une quelconque des revendications précédentes, dans lequel les informations codées comprennent des informations d'identification pour identifier le dispositif machine (S1 à Sn) et/ou des informations d'état pour informer le réseau d'accès radio (RAN) d'un état du dispositif machine (S1 à Sn).

7. Procédé selon l'une quelconque des revendications précédentes, dans lequel les préambules de canal d'accès aléatoire (P1 à P3) sont transmis en utilisant un niveau de puissance (p) qui est sélectionné en fonction d'un niveau de puissance d'une communication réussie précédente entre le dispositif machine (S1 à Sn) et le réseau d'accès radio (RAN) sur le canal d'accès aléatoire (RACH).

8. Dispositif machine, en particulier un dispositif capteur (Sn), comprenant :
une unité de transmission (TU) adaptée pour transmettre une pluralité de préambules de canal d'accès aléatoire (P1 à P3) sur un canal d'accès aléatoire (RACH) à un réseau d'accès radio (RAN), et
une unité de codage (EU) pour coder des informations à fournir au réseau d'accès radio (RAN) sur le canal d'accès aléatoire (RACH),
**caractérisé en ce que**
l'unité de codage (EU) est adaptée pour coder les informations en sélectionnant des décalages de fréquence (0, +Δf, -Δf) entre les préambules de canal d'accès aléatoire (P1 à P3) devant être transmis par l'unité de transmission (TU).

9. Dispositif machine selon la revendication 8, dans lequel l'unité de codage (EU) est en outre adaptée pour sélectionner des décalages de synchronisation (Δt) entre les préambules de canal d'accès aléatoire (P1 à P3) pour coder les informations.

10. Dispositif machine selon la revendication 8 ou 9, dans lequel l'unité de codage (EU) est en outre adaptée pour sélectionner le contenu des préambules de canal d'accès aléatoire (P1 à P3), en particulier leurs numéros de séquence (C₀, C₁, C₂), pour coder les informations.

11. Dispositif machine selon l'une quelconque des revendications 8 à 10, étant adapté pour utiliser des paramètres de configuration de réseau pré-configurés, en particulier des paramètres de couche supérieure pré-configurés (LP2, LP3), du réseau d'accès radio (RAN) pour communiquer sur le canal d'accès aléatoire (RACH).

12. Réseau de machines (MN) comprenant une pluralité de dispositifs machine (S1 à Sn) selon l'une quelconque des revendications 8 à 11, le réseau de machines (MN) comprenant en outre : un dispositif machine maître (MS) adapté pour recevoir des paramètres de configuration de réseau (LP2, LP3) provenant du réseau d'accès radio (RAN), et pour distribuer les paramètres de configuration de réseau (LP2, LP3) à la pluralité de dispositifs machine (S1 à Sn) pour mettre à jour des paramètres de réseau pré-configurés, en particulier des paramètres de couche supérieure (LP2_{S}, LP3_{S}), utilisés dans les dispositifs machine (S1 à Sn) pour communiquer avec le réseau d'accès radio (RAN) sur le canal d'accès aléatoire (RACH).

13. Dispositif de réception, en particulier une station de base (BS), pour communiquer sur un canal d'accès aléatoire (RACH) avec au moins un dispositif machine (S1 à Sn) selon l'une quelconque des revendications 8 à 11,
**caractérisé en ce que**
le dispositif de réception (BS) est adapté pour décoder les informations codées dans les décalages de fréquence pré-sélectionnés (0, +Δf, -Δf) entre les préambules de canal d'accès aléatoire (P1 à P3) transmis par l'au moins un dispositif machine (S1 à Sn).

14. Dispositif de réception selon la revendication 13, adapté pour identifier le dispositif machine (S1 à Sn) en comparant les informations décodées à des informations stockées sur des décalages de fréquence pré-configurés (0, +Δf, -Δf) des préambules de canal d'accès radio (P1 à P3) d'une pluralité de dispositifs machine différents (S1 à Sn).

15. Système (C) pour un réseau d'accès radio (RAN), comprenant :
une station de base (BS) selon la revendication 13 ou 14, et
une pluralité de dispositifs machine (S1 à Sn) selon l'une quelconque des revendications 8 à 11.
